# EUROPÄISCHE PATENTSCHRIFT

(11) **EP 2 001 076 B1**
(45) Veröffentlichungstag und Bekanntmachung des Hinweises auf die Patenterteilung: **30.06.2010**
(21) Anmeldenummer: 08009844.5
(22) Anmeldetag: 29.05.2008
(51) Int. Cl.: H01P 1/06, F16C 32/00

(54) **HF-Drehkupplung mit lambda/4-Leitung zwischen Stator und Rotor**
HF turn coupling with lambda/4 output between stator and rotor
Accouplement rotatif HF doté d'une ligne lambda /4 entre stator et rotor

(30) Priorität: 06.06.2007 DE 102007026431
(43) Veröffentlichungstag der Anmeldung: 10.12.2008
(73) Patentinhaber: Spinner GmbH, 80335 München (DE)
(72) Erfinder: Stadler, Christian, 83043 Aibling (DE); Fischer, Franz Prof. Dr., 83209 Prien (DE)
(74) Vertreter: Prietsch, Reiner

(56) Entgegenhaltungen:
- EP-A- 1 483 081
- DE-A1- 19 953 118
- DE-B3- 10 209 776
- GB-A- 2 141 289
- US-A- 5 233 320
- US-A- 5 645 354
- US-A- 5 748 156

## Beschreibung

Die Erfindung betrifft eine HF-Drehkupplung mit einem Stator, der über mindestens eine λ/4-Leitung HF-mäßig mit mindestens einem Rotor verbunden ist und diesen mindesten teilweise umschließt. HF-Drehkupplungen dieser Gattung können sowohl in koaxialer als auch in Hohlleiter-Technik ein- oder mehrkanalig ausgeführt sein.

Aus der DE-A-100 37 747 ist eine Anordnung zur breitbandigen elektrischen Signalübertragung über Koppelflächen von zwei relativ zueinander drehbar angeordneten Komponenten bekannt. Der Raum zwischen den Koppelflächen ist mit einem Dielektrikum gefüllt, das aus einem Gasfilm bestehen kann, so dass die Koppelflächen auf sehr kleinem Abstand gehalten werden können.

Eine koaxiale, mehrkanalige Bauform einer Drehkupplung ist aus der EP-B-0 951 110 bekannt. Der oder die Rotoren einer Drehkupplung sind in dem Stator über Wälzlager, aus Platz und Gewichtsgründen häufig Dünnringlager, gelagert. Diese Lager sind der sowohl mechanisch als auch elektrisch bzw. HF-technisch problematischste Bestandteil jeder Drehkupplung. Weil der Rotor und die Wälzlager aus unterschiedlichen Werkstoffen (meist Aluminium und Stahl) bestehen, kommt es infolge der unterschiedlichen Wärmeausdehnungskoeffizienten dieser Werkstoffe temperaturabhängig zu erhöhter Reibung oder vergrößertem Spiel. Erhöhte Reibung führt regelmäßig zu Lagerschäden, vergrößertes Spiel zu schwankenden elektrischen Übertragungseigenschaften. Weitere Nachteile sind das Austreten des Schmierstoffs bei hohen Temperaturen, geringe Korrosionsbeständigkeit der Wälzlager und mangelhafte Abdichtung gegenüber dem zur Verbesserung der elektrischen Durchschlagfestigkeit häufig mittels vorgetrockneter Luft unter erhöhtem Innendruck gehaltenen HF-Raum. HF-Drehkupplungen erfordern deshalb in kurzen Zeitabständen kosten- und zeitaufwendige Wartungen einschließlich eines neuen Abgleichs der elektrischen Eigenschaften nach jeder Wartung. Währenddessen ist das gesamte HF-System, dessen Bestandteil die Drehkupplung ist, also z.B. ein ziviles oder militärisches Radarsystem, funktionsunfähig.

Aus der US-A-5 748 156 ist eine HF-Drehkupplung mit den einleitend genannten Merkmalen des Oberbegriffes des Anspruches 1 bekannt. Der Rotor besteht aus einer angetriebenen Dipolantenne am Ende eines in den Stator reichenden Leitungsstücks, das von einer Hülse aus einem Dielektrikum umschlossen ist. Die Hülse bildet das mechanische Lager des Rotors und ist über einen Servomotor angetrieben.

Der Erfindung liegt die Aufgabe zugrunde, eine zumindest weitgehend wartungsfreie und langlebige Drehkupplung zu schaffen.

Diese Aufgabe ist erfindungsgemäß durch die Merkmale des Anspruches 1 gelöst.

Luftlager sind grundsätzlich bekannt. Für die hier vorgeschlagene HF-Drehkupplung sind Luftlager besonders geeignet, bei denen die Luft in den Spalt zwischen den gegeneinander beweglichen Teilen über zahlreiche Mikrolöcher gedrückt wird, wie aus der DE-A-44 03 340 und der DE-C-44 36 156 bekannt ist.

Mit dem Wegfall der Wälzlager entfallen auch die durch diese bedingten Nachteile, nämlich das problematische Temperaturverhalten, die temperaturabhängigen Viskositätsschwankungen des Schmierstoffs, ungenauer Rundlauf und schwankenkungen des Schmierstoffs, ungenauer Rundlauf und schwankendes Antriebsdrehmoment. Bei gleichem Werkstoff für Stator und Rotor, in der Regel einem Leichtmetall, ist auch das Problem der unterschiedlichen Wärmedehnungen dieses Werkstoffes und des Werkstoffes der Lager, normalerweise Stahl, gegenstandslos, so dass der Luftlagerspalt zwischen dem Stator und dem Rotor und damit auch die HF-technischen Übertragungseigenschaften weitestgehend konstant bleiben. Bei Betrieb des HF-Raumes unter Überdruck kann der in der Regel sehr enge Luftlagerspalt als Dichtspalt dienen. Das Antriebsdrehmoment für den Rotor ist klein und vor allem über einen weiten Temperaturbereich konstant. Aus allen diesen Gründen ist die HF-Drehkupplung praktisch wartungsfrei.

Die berührungslose Signalübertragung zwischen dem Rotor oder den Rotoren und dem Stator kann über gestreckte oder gefaltete λ/4-Leitungen erfolgen.

Die Luftlager können außerhalb des HF-Raums angeordnet sein. In diesem Fall kann eine bestehende Konstruktion der HF-technischen Kopplung zwischen Stator und Rotor zumindest weitgehend unverändert bleiben.

Der enge und konstante Luftlagerspalt von etwa 30µm, vorzugsweise weniger als 15 µm, ermöglicht es jedoch auch, die Luftlager innerhalb des HF-Raums anzuordnen. Die die Luftlager durchströmende Lagerluft wirkt dann gleichzeitig als Kühlluft für die HF-mäßig gekoppelten und sich je nach übertragener Leistung deutlich erwärmenden Teile. Die geringe und konstante Spaltweite führt des Weiteren zu einer erheblichen Verbesserung des Stehwellen-Verhältnisses (VSWR) über die gesamte nutzbare Frequenzbandbreite der Kupplung.

Das radiale Luftlager besteht aus einer mit radialen Luftaustrittsbohrungen versehenen Innenfläche eines hohlzylindrischen Abschnitts des Stators und einer Umfangsfläche eines zylindrischen Abschnitts des Rotors. Diese radialen Luftaustrittsbohrungen sind im Stator am besten sowohl über den Umfang als auch über die axiale Länge des hohlzylindrischen Abschnitts des Stators verteilt angeordnet.

Die radialen Luftaustrittsbohrungen können einen Durchmesser von 10 µm bis 100 µm und eine sehr geringe axiale Länge haben. Zur Erzielung eines stabilen Luftpolsters kommunizieren diese Luftaustrittsbohrungen mit mindestens einem mit einer Druckluftquelle verbundenen Ringkanal in dem Stator.

In analoger Weise umfasst das axiale Luftlager eine mit axialen Luftaustrittsbohrungen versehene Kreisringfläche des Stators und eine Kreisringfläche auf einer Stirnseite des Rotors. Insbesondere bei einer langbauenden Drehkupplung kann der Rotor über zwei derartige axiale Luftlager, die voneinander axial beabstandet sind, gelagert sein. Bei den entsprechenden Kreisringflächen des Rotors kann es sich um dessen jeweilige Stirnflächen handeln.

Auch die axialen Luftaustrittsbohrungen der Kreisringfläche des Stators können sowohl über den Umfang als auch über den Radius der Kreisringfläche verteilt angeordnet sein.

Wie die radialen Luftaustrittsbohrungen können auch die axialen Luftaustrittsbohrungen mit mindestens einem mit einer Druckluftquelle verbundenen Ringkanal in dem Stator kommunizieren. Die gleiche Druckluftquelle kann sowohl die radialen als auch die axialen Luftaustrittsbohrungen speisen.

Besonders bevorzugt, vor allem für kurzbauende HF-Drehkupplungen, ist eine Ausführungsform, bei der der Rotor mindestens einen ringförmigen Abschnitt aus einem weichmagnetischen Werkstoff hat und der Stator im Bereich des axialen Luftlagers Mittel zur magnetischen Anziehung des Rotors umfasst. Diese Ausführungsform kommt deshalb mit nur einem axialen Luftlager aus, denn in dem radialen Luftlagerspalt stellt sich ein Kräftegleichgewicht zwischen dem Luftpolster und den magnetischen Anziehungskräften zwischen dem Stator und dem Rotor ein.

Bei einer Weiterbildung dieser Ausführungsform kann der aus einem weichmagnetischen Werkstoff bestehende Abschnitt des Rotors aus einem weichmagnetischen Ring und der Rotor im Übrigen aus einem Leichtmetall bestehen. Insbesondere in dieser Ausführung ist es vorteilhaft, wenn auch der Stator aus einem Leichtmetall besteht, weil sich dadurch insgesamt eine beträchtliche Gewichtsersparnis ergibt.

Um unterschiedlichen Ausdehnungskoeffizienten des Rotorwerkstoffes und des Werkstoffes des weichmagnetischen Rings Rechnung zu tragen, ist letzterer an mindestens einer Stelle seines Umfangs radial geteilt und in Umfangsrichtung gleitfähig mit dem Rotor verbunden.

Die Mittel zur magnetischen Anziehung bestehen zweckmäßig aus über den Umfang des Stators gleichmäßig verteilt angeordneten, axial polarisierten Permanentmagneten.

Mindestens die dem Rotor zugewandten Polflächen der Permanentmagnete können über einen Feldverteilungsring magnetisch verbunden sein, um in Umfangsrichtung eine Vergleichmäßigung der dem Luftpolster in dem Lagerspalt entgegenwirkenden Anziehungskraft zwischen Rotor und Stator zu erzielen.

Die mindestens eine λ/4-Leitung, die den Stator HF-mäßig mit dem Rotor verbindet, kann radial angeordnet und zur Verringerung des Durchmessers der Kupplung gefaltet sein.

Eine weitere Durchmesserverringerung auf Kosten einer Vergrößerung der Länge der HF-Drehkupplung erzielt man, wenn man die λ/4-Leitung statt dessen axial anordnet.

Ein Kompromiss zwischen Länge und Durchmesser der Drehkupplung besteht darin, eine axial verlaufende, jedoch gefaltete λ/4-Leitung vorzusehen.

In der Zeichnung sind zwei Ausführungsbeispiele einer HF-Drehkupplung nach der Erfindung schematisch vereinfacht dargestellt. Es zeigt:
- Fig. 1: den Stator und den Rotor einer ersten Ausführungsform in einem perspektivischen Teilschnitt,
- Fig. 2: einen Teillängsschnitt entsprechend der Ebene A-A in Fig. 1,
- Fig. 3: einen Teilbereich entsprechend der Ebene B-B in Fig. 1, vergrößert,
- Fig. 3a: einen Teilbereich aus Fig.3, nochmals vergrößert,
- Fig. 4: einen Schnitt entsprechend der Linie C-C in Fig. 2, vergrößert,
- Fig. 5: den Stator und den Rotor einer zweiten Ausführungsform in einem perspektivischen Teilschnitt,
- Fig. 6: einen Teillängsschnitt entsprechend der Ebene D-D in Fig. 5,
- Fig. 7: einen Teilbereich entsprechend der Ebene E-E in Fig. 5, vergrößert,

In allen Figuren sind nur die zum Verständnis der Erfindung notwendigen Teile einer HF-Drehkupplung dargestellt.

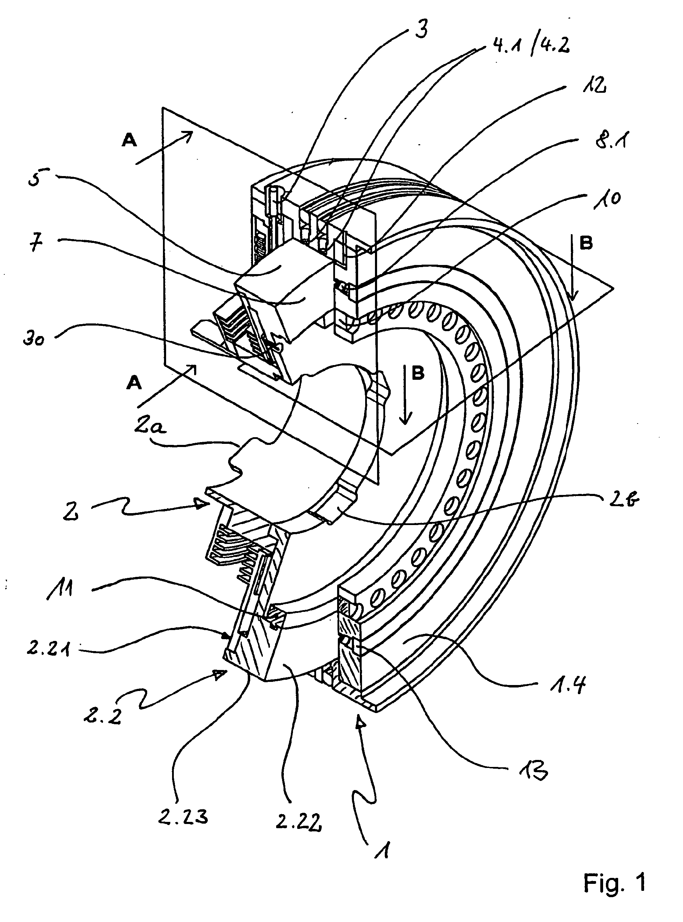

In der Ausführungsform gemäß den Fig. 1 bis 4 ist in einem Stator 1 ein Rotor 2 über ein radiales Luftlager und ein axiales Luftlager gelagert. Wie Fig. 1 zeigt, hat der Rotor 2 Mitnehmerklauen 2a und Mitnehmerausnehmungen 2b zur Verbindung mit einem nicht dargestellten Drehantrieb und z.B. einer Radarantenne.

Hochfrequenztechnisch bildet der Stator 1 den Außenleiter für einen koaxialen Anschluss mit einem Innenleiter 3. Der Stator 1 ist über zwei radiale, gefaltete λ/4-Leitungen mit dem Rotor 2 in an sich bekannter Weise galvanisch berührungslos kontaktiert. Der Rotor 2 hat an einer Stelle seines Umfanges einen koaxialen Anschluss mit einem Innenleiter 30 zur Abnahme oder Zuführung von HF-Signalen.

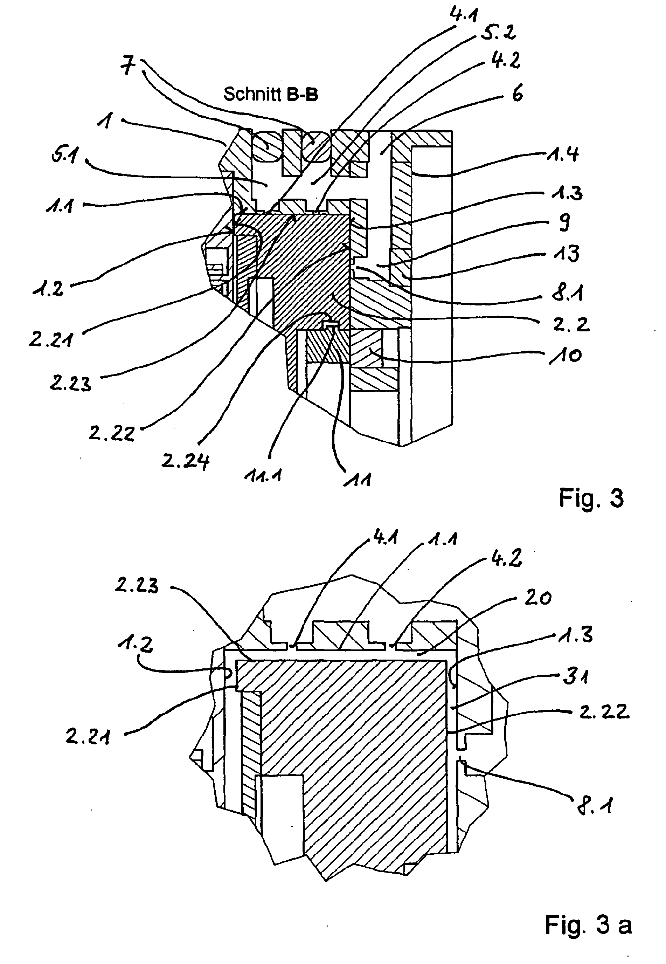

Der Rotor 2 hat einen Flanschring 2.2. Der Flanschring 2.2 greift in einen hohlzylindrischen Abschnitt des Stators 1 ein und hat eine ringförmige Stirnfläche 2.21, eine dieser gegenüberliegende ringförmige Stirnfläche 2.22 und eine zylindrische Umfangsfläche 2.23. Die zylindrische Umfangsfläche 2.23 begrenzt zusammen mit einer hohlzylindrischen Mantelfläche 1.1 des Stators 1 ein radiales Luftlager. Wie insbesondere der vergrößerte Ausschnitt in Fig. 3 zeigt, münden hierzu in die hohlzylindrische Mantelfläche 1.1 radiale Luftaustrittsbohrungen 4.1 und 4.2, die jeweils einen Durchmesser von z.B. zwischen 60 bis 80 µm haben und mit umlaufenden Ringkanälen 5.1 und 5.2 in Verbindung stehen, die ihrerseits mit einem gemeinsamen Anschluss 6 kommunizieren, über den Druckluft aus einer nicht dargestellten äußeren Quelle eingespeist wird. Die Ringkanäle 5.1 und 5.2 sind nach außen durch O-Ringe 7 oder dergleichen verschlossen.

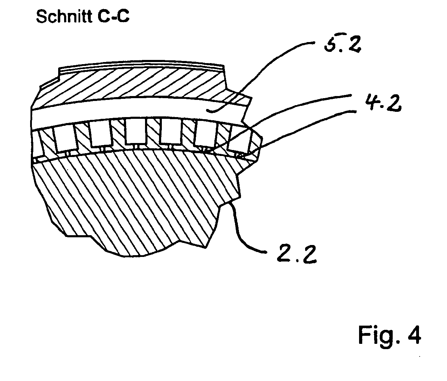

Die radialen Luftaustrittsbohrungen 4.1 und 4.2 sind gemäß Fig. 4 gleichmäßig über den Umfang der hohlzylindrischen Mantelfläche 1.1 des Stators 1 verteilt. In bestimmten Lastfällen kann jedoch eine ungleichmäßige Verteilung der Luftaustrittsbohrungen vorteilhafter sein.

In Abhängigkeit von der Dicke des Flanschrings 2.2 in axialer Richtung kann statt der zwei parallelen Reihen von radialen Luftaustrittsbohrungen 4.1 und 4.2 auch eine einzige Reihe genügen, oder es können mehr als zwei parallele Reihen solcher radialer Luftaustrittsbohrungen vorgesehen sein.

Beim Einblasen von Druckluft über den Anschluss 6 stellt sich zwischen der Umfangsfläche 2.23 des Flanschrings 2.2 und der hohlzylindrischen Mantelfläche 1.1 des Stators ein über den Umfang i.w. konstanter, radialer Luftlagerspalt im Größenordnungsbereich von 10 bis 20 µm ein.

Die den ringförmigen Stirnflächen 2.21 und 2.22 gegenüberliegenden Kreisringflächen 1.2. und 1.3 des hohlzylindrischen Abschnitts des Stators 1 sind so weit voneinander beabstandet, dass zwischen diesen Kreisringflächen und den Gegenflächen 2.21 und 2.22 des Rotors jeweils ein umlaufender Ringspalt verbleibt. Die ringförmige Stirnfläche 2.22 des Flanschrings 2.2 des Rotors 2 begrenzt zusammen mit der gegenüberliegenden Kreisringfläche 1.3 in einem Lagerdeckel 1.4 des Stators 1 ein axiales Luftlager. Hierzu münden in die Kreisringfläche 1.3 axiale Luftaustrittsbohrungen wie 8.1 in Fig. 3, die hier gleichmäßig über den Umfang verteilt angeordnet sind. Die axialen Luftaustrittsbohrungen 8.1 werden analog den radialen Luftaustrittsbohrungen 4.1 und 4.2 aus einem gemeinsamen Ringkanal 9 mit Druckluft versorgt. Der Ringkanal 9 ist nach aussen durch einen Ring 13 verschlossen und kommuniziert mit dem gleichen Druckluftanschluss 6 wie die Ringkanäle 5.1 und 5.2. Wie im Fall des radialen Luftlagers kann auch dieses axiale Luftlager mehr als eine Reihe von Luftaustrittsbohrungen umfassen. Letztere können in bestimmten Lastfällen auch ungleichmäßig über den Umfang verteilt sein.

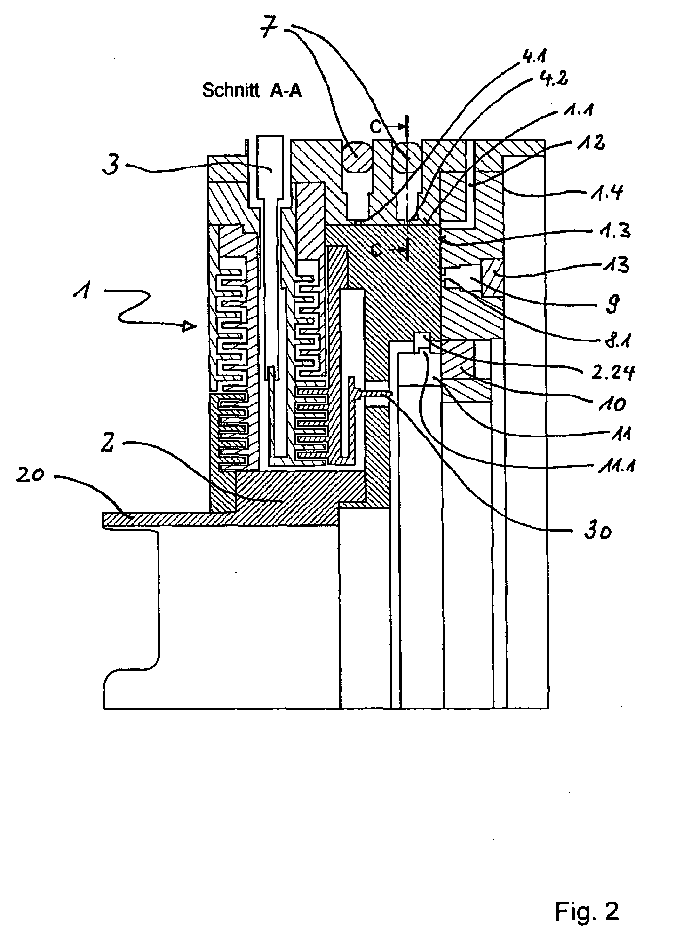

Die aus den axialen Luftaustrittsbohrungen 8.1 in den Luftlagerspalt gedrückte Luft ist bestrebt, den Rotor 2 in axialer Richtung zu verschieben. Der Verschiebung entgegen wirkt ein Satz von gleichmäßig über den Umfang des Lagerdeckels 1.4 des Stators 1 verteilt angeordneten Permanentmagneten 10, die in axialer Richtung magnetisiert und mit ihrer dem Rotor 2 zugewandten Polfläche im Wesentlichen bündig mit der Kreisringfläche 1.3 des Lagerdeckels 1.4 des Stators 1 sind. Die Permanentmagnete 10 wirken auf einen Stahlring 11, der Teil des Rotors 2 ist, nämlich mit einer Ringschulter 11.1 in eine Umfangsnut 2.24 des Flanschrings 2.2 eingreift und dadurch formschlüssig mit dem Flanschring 2.2 verbunden ist. Zum Ausgleich unterschiedlicher Wärmedehnungen des Rotorwerkstoffs, der insbesondere eine Leichtmetalllegierung sein kann und des Stahlrings 11 sitzt dessen Ringschulter 11.1 lose in der Umfangsnut 2.24 und ist, wie aus Figur 2 ersichtlich, an einer Stelle seines Umfanges geteilt. Auf den Stahlring 11 kann verzichtet werden, wenn der Rotor 2 selbst oder zumindest dessen Flanschring 2.2 aus einem ferromagnetischen Werkstoff besteht.

Fig 3a zeigt einen vergrößerten Ausschnitt aus Fig. 3 zur Veranschaulichung der übertrieben weit dargestellten Lagerspalte, nämlich des radialen Luftlagerspaltes 20 und des axialen Luftlagerspaltes 31.

Die aus dem radialen Luftlagerspalt 20 und dem axialen Luftlagerspalt 31 abströmende Luft wird über einen gemeinsamen Abluftkanal 12 (vgl. Fig. 2) abgeführt.

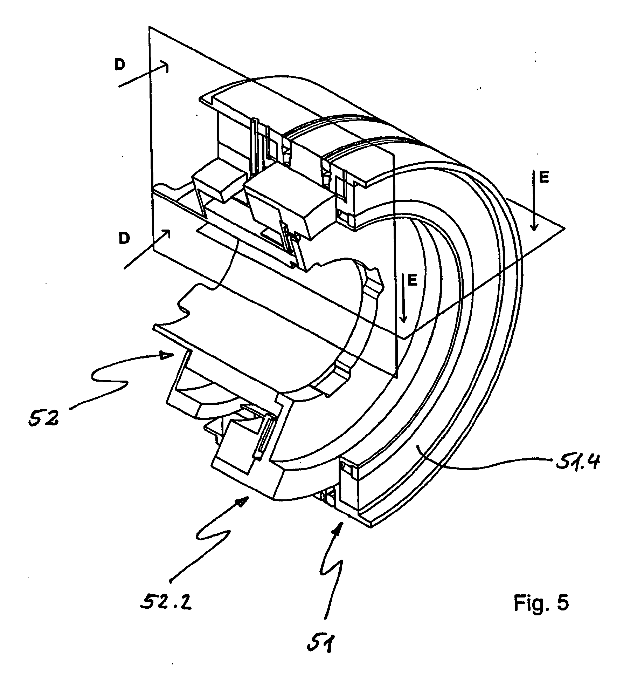

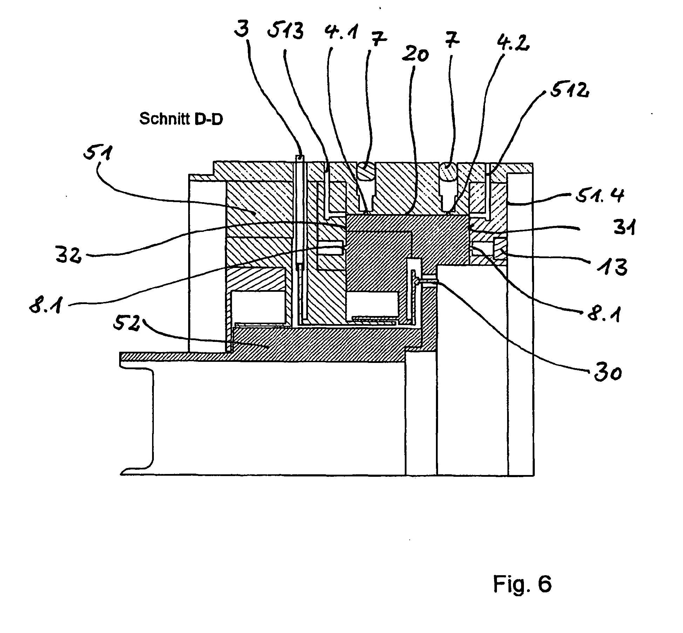

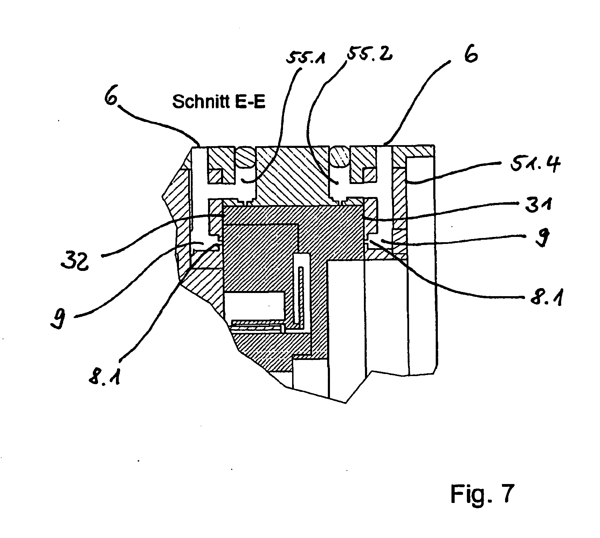

Die Fig. 5 bis 7 zeigen eine zweite Ausführungsform der HF-Drehkupplung.

Identische Teile haben die gleichen Bezugsziffern wie in den Fig. 1 bis 4, funktionell entsprechende Teile haben eine vorangestellte Ziffer "5".

Die zweite Ausführungsform unterscheidet sich von der ersten Ausführungsform zum einen dadurch, dass der Rotor 52 mit dem Stator 51 statt über eine in radialer Richtung gefaltete λ/4-Leitung über eine gerade, axiale λ/4-Leitung berührungslos kontaktiert ist und dass zum anderen der radiale Flanschring 52.2 des Rotors 52 nunmehr beidseits über axiale Luftlager gelagert ist. Das radiale Luftlager mit dem Luftlagerspalt 20 hat die gleiche Konstruktion wie dasjenige der Ausführungsform gemäß den Figuren 1 bis 4. Das zweite (linke) axiale Luftlager mit dem Luftlagerspalt 32 ist im Wesentlichen spiegelbildlich zu dem ersten (rechten) axialen Luftlager mit dem Luftlagerspalt 31 ausgeführt, das seinerseits demjenigen der Ausführungsform gemäß den Fig. 1 bis 4 entspricht. Für das zweite axiale Luftlager ist ein weiterer Abluftkanal 513 vorgesehen.

Die Ausführungsform gemäß den Fig. 5 bis 7 baut zwar in axialer Richtung länger als die Ausführungsform nach den Fig. 1 bis 4, hat jedoch einen kleineren Durchmesser und kommt vor allem ohne Permanentmagnete und ein entsprechendes Gegenstück im Rotor aus.

## Patentansprüche

1. HF-Drehkupplung mit einem Stator (1;51), der über mindestens eine λ/4-Leitung HF-mäßig mit mindestens einem Rotor (2;52) verbunden ist und diesen mindestens teilweise umschließt, **dadurch gekennzeichnet, dass** der Rotor (2;52) in dem Stator (1.51) berührungslos über mindestens ein radiales Luftlager (20), bestehend aus einer mit radialen Luftaustrittsbohrungen (4.1, 4.2) versehenen Mantelfläche (1.1) eines hohlzylindrischen Abschnitts des Stators (1) und einer Umfangsfläche (2.23) eines zylindrischen Abschnitts (2.2) des Rotors (2) und mindestens ein axiales Luftlager (31, 32), umfassend eine mit axialen Luftaustrittsbohrungen versehene Kreisringfläche (1.3) des Stators (1) und eine ringförmige Stirnfläche (2.22) auf einer Stirnseite des Rotors (2), gelagert ist.

2. HF-Drehkupplung nach Anspruch 1, **dadurch gekennzeichnet, dass** die Luftlager (20, 31, 32) außerhalb des HF-Raums angeordnet sind.

3. HF-Drehkupplung nach Anspruch 1 oder 2, **dadurch** gekennzeich-net, dass die radialen Luftaustrittsbohrungen (4.1, 4.2) der Mantelfläche (1.1) des hohlzylindrischen Abschnitts des Stators (1) sowohl über den Umfang als auch über die axiale Länge des hohlzylindrischen Abschnitts verteilt angeordnet sind.

4. HF-Drehkupplung nach einem der Ansprüche 1 bis 3, **dadurch gekennzeichnet, dass** die radialen Luftaustrittsbohrungen (4.1, 4.2) mit mindestens einem mit einer Druckluftquelle verbundenen Ringkanal (5.1, 5.2) in dem Stator (1) kommunizieren.

5. HF-Drehkupplung nach einem der Ansprüche 1 bis 4, **dadurch gekennzeichnet, dass** die axialen Luftaustrittsbohrungen (8.1) der Kreisringfläche (1.3) des Stators (1) sowohl über den Umfang als auch über den Radius der Kreisringfläche (1.3) verteilt angeordnet sind.

6. HF-Drehkupplung nach einem der Ansprüche 1 bis 5, **dadurch gekennzeichnet, dass** die axialen Luftaustrittsbohrungen (8.1) mit mindestens einem mit einer Druckluftquelle verbundenen Ringkanal (9) in dem Stator (1) kommunizieren.

7. HF-Drehkupplung nach einem der Ansprüche 1 bis 6, **dadurch gekennzeichnet, dass** der Rotor (2) mindestens einen ringförmigen Abschnitt (11) aus einem weichmagnetischen Werkstoff hat und dass der Stator (1) im Bereich des axialen Luftlagers Mittel (10) zur magnetischen Anziehung des Rotors umfasst.

8. HF-Drehkupplung nach Anspruch 7, **dadurch gekennzeichnet, dass** der aus einem weichmagnetischen Werkstoff bestehende Abschnitt des Rotors (2) aus einem weichmagnetischen Ring (11) und der Rotor (2) im Übrigen aus einem Leichtmetall besteht.

9. HF-Drehkupplung nach Anspruch 8, **dadurch gekennzeichnet, dass** der weichmagnetische Ring (11) an mindestens einer Stelle seines Umfangs radial geteilt und in Umfangsrichtung gleitfähig mit dem Rotor (2) verbunden ist.

10. HF-Drehkupplung nach Anspruch 8 oder 9, **dadurch dadurch gekennzeichnet, dass** die Mittel zur magnetischen Anziehung aus in den Stator (1) eingebetteten, axial polarisierten und über den Umfang des Stators (1) gleichmäßig verteilt angeordneten Permanentmagneten 10) bestehen.

11. HF-Drehkupplung nach Anspruch 10, **dadurch gekennzeichnet, dass** mindestens die dem Rotor (2) zugewandten Polflächen der Permanenmagnete (10) über einen Feldverteilungsring magnetisch verbunden sind.

12. HF-Drehkupplung nach einem der Ansprüche 1 bis 11, **dadurch gekennzeichnet, dass** die λ/4-Leitung, die den Stator (1) HF-mäßig mit dem Rotor (2)verbindet, radial oder axial gefaltet ist.

## Claims

1. An RF rotary coupling, comprising a stator (1; 51) which is connected with at least one rotor (2; 52) in respect of radio frequency via at least one λ/4 line and encloses the same at least partly, **characterized in that** the rotor (2; 52) is held in the stator (1.51) in a contactless manner via at least one radial air bearing (20), consisting of a jacket surface (1.1) of a hollow-cylindrical section of the stator (1) which is provided with radial air outlet bores (4.1, 4.2) and a circumferential area (2.23) of a cylindrical section (2.2) of the rotor (2) and at least one axial air bearing (31, 32), comprising a circular ring area (1.3) of the stator (1) which is provided with axial air outlet bores and an annular face area (2.22) on one face side of the rotor (2).

2. An RF rotary coupling according to claim 1, **characterized in that** the air bearings (20, 31, 32) are arranged outside of the RF space.

3. An RF rotary coupling according to claim 1 or 2, **characterized in that** the radial air outlet bores (4.1, 4.2) of the jacket area (1.1) of the hollow-cylindrical section of the stator (1) are arranged in a distributed manner both over the circumference and the axial length of the hollow-cylindrical section.

4. An RF rotary coupling according to one of the claims 1 to 3, **characterized in that** the radial air outlet bores (4.1, 4.2) communicate with at least one annular channel (5.1, 5.2) in the stator (1) which is connected with a compressed air source.

5. An RF rotary coupling according to one of the claims 1 to 4, **characterized in that** the axial air outlet bores (8.1) of the circular ring area (1.3) of the stator (1) are arranged in a distributed manner both over the circumference and over the radius of the circular ring area (1.3).

6. An RF rotary coupling according to one of the claims 1 to 5, **characterized in that** the axial air outlet bores (8.1) communicate with at least one annular channel (9) in the stator (1) which is connected with a compressed air source.

7. An RF rotary coupling according to one of the claims 1 to 6, **characterized in that** the rotor (2) comprises at least one annular section (11) which is made of a soft-magnetic material and the stator (1) comprises means (10) for magnetic attraction of the rotor in the region of the axial air bearing.

8. An RF rotary coupling according to claim 7, **characterized in that** the section of the rotor (2) consisting of a soft-magnetic material consists of a soft-magnetic ring (11) and the rotor (2) consists apart from that of a light metal.

9. An RF rotary coupling according to claim 8, **characterized in that** the soft-magnetic ring (11) is radially divided in at least one point of its circumference and is connected with the rotor (2) in a sliding manner in the circumferential direction.

10. An RF rotary coupling according to claim 8 or 9, **characterized in that** the means for magnetic attraction consist of permanent magnets (10) which are embedded in the stator (1), are axially polarized and are arranged in an evenly distributed manner over the circumference of the stator (1).

11. An RF rotary coupling according to claim 10, **characterized in that** at least the pole faces of the permanent magnets (10) facing the rotor (2) are magnetically connected via a field distribution ring.

12. An RF rotary coupling according to one of the claims 1 to 11, **characterized in that** the λ/4 line which connects the stator (1) in respect of radio frequency with the rotor (2) is folded radially or axially.

## Revendications

1. Coupleur HF pivotant avec un stator (1 ; 51) qui est relié en transmission HF par au moins une ligne λ/4 à au moins un rotor (2 ; 52) et entoure au moins partiellement celui-ci, **caractérisé en ce que** le rotor (2 ; 52) est supporté sans contact dans le stator (1.51) par au moins un palier pneumatique radial (20) composé d'une surface d'enveloppe (1.1) d'une partie cylindrique creuse du stator (1) dotée d'alésages de sortie d'air radiaux (4.1, 4.2) et d'une surface de circonférence (2.23) d'une partie cylindrique (2.2) du rotor (2) et d'au moins un palier pneumatique axial (31, 32), comprenant une surface annulaire circulaire (1.3) du stator (1) dotée d'alésages de sortie d'air axiaux et une surface d'extrémité (2.22) annulaire sur une face d'extrémité du rotor (2).

2. Coupleur HF pivotant selon la revendication 1, **caractérisé en ce que** les paliers pneumatiques (20, 31, 32) sont disposés à l'extérieur de l'espace HF.

3. Coupleur HF pivotant selon la revendication 1 ou 2, **caractérisé en ce que** les alésages de sortie d'air radiaux (4.1, 4.2) de la surface d'enveloppe (1.1) de la partie cylindrique creuse du stator (1) sont réparties aussi bien sur la circonférence que sur la longueur axiale de la partie cylindrique creuse.

4. Coupleur HF pivotant selon l'une des revendications 1 à 3, **caractérisé en ce que** les alésages de sortie d'air radiaux (4.1, 4.2) communiquent avec au moins un canal annulaire (5.1, 5.2) dans le stator (1) relié à une source d'air comprimé.

5. Coupleur HF pivotant selon l'une des revendications 1 à 4, **caractérisé en ce que** les alésages de sortie d'air axiaux (8.1) de la surface annulaire circulaire (1.3) du stator (1) sont répartis aussi bien sur la circonférence que sur le rayon de la surface annulaire circulaire (1.3).

6. Coupleur HF pivotant selon l'une des revendications 1 à 5, **caractérisé en ce que** les alésages de sortie d'air axiaux (8.1) communiquent avec au moins un canal annulaire (9) dans le stator (1) relié à une source d'air comprimé.

7. Coupleur HF pivotant selon l'une des revendications 1 à 6, **caractérisé en ce que** le rotor (2) possède au moins une partie annulaire (11) faite d'un matériau magnétique doux et le stator (1) possède au niveau du palier pneumatique axial des moyens (10) pour l'attraction magnétique du rotor.

8. Coupleur HF pivotant selon la revendication 7, **caractérisé en ce que** la partie du rotor (2) composée d'un matériau magnétique doux se compose d'un anneau magnétique doux (11) et le rotor (2) se compose pour le reste d'un métal léger.

9. Coupleur HF pivotant selon la revendication 8, **caractérisé en ce que** l'anneau magnétique doux (11) est partagé dans le sens radial en au moins un point de sa circonférence et relié de façon coulissante dans le sens de la circonférence avec le rotor (2).

10. Coupleur HF pivotant selon la revendication 8 ou 9, **caractérisé en ce que** les moyens d'attraction magnétique se composent d'aimants permanents (10) inclus dans le stator (1), polarisés dans le sens axial et répartis uniformément sur la circonférence du stator (1).

11. Coupleur HF pivotant selon la revendication 10, **caractérisé en ce qu'**au moins les surfaces de pôle des aimants permanents (10) tournées vers le rotor (2) sont reliées de façon magnétique par un anneau de distribution de champ.

12. Coupleur HF pivotant selon l'une des revendications 1 à 11, **caractérisé en ce que** la ligne λ/4 qui relie le stator (1) au rotor (2) en transmission HF est repliée dans le sens radial ou axial.
